**Europäisches Patentamt**

**European Patent Office**

**Office européen des brevets**

(19)

(11) Veröffentlichungsnummer: **0 004 628**
**B1**

# EUROPÄISCHE PATENTSCHRIFT

(12)

(45) Veröffentlichungstag der Patentschrift:
12.05.82

(51) Int. Cl.³: **C 04 B  13/28**

(21) Anmeldenummer: 79100911.1

(22) Anmeldetag: 26.03.79

(54) Zusatzmittel für Entfeuchtungsputz auf Zementbasis und seine Verwendung.

(30) Priorität: 03.04.78  DE 2814317

(43) Veröffentlichungstag der Anmeldung:
17.10.79 Patentblatt 79/21

(45) Bekanntmachung des Hinweises auf die Patenterteilung:
12.05.82 Patentblatt 82/19

(84) Benannte Vertragsstaaten:
BE CH FR GB IT NL SE

(56) Entgegenhaltungen:
DE-A-1 953 158
DE-A-2 601 816
GB-A-1 388 349
US-A-4 039 345

(73) Patentinhaber: Maier, Siegfried, Westendstrasse 2,
D-8938 Buchloe (DE)

(72) Erfinder: Maier, Siegfried, Westendstrasse 2,
D-8938 Buchloe (DE)

(74) Vertreter: Deufel, Paul, Dr. et al, Patentanwälte
Müller-Boré.Deufel Schön.Hertel Siebertstrasse 4,
D-8000 München 86 (DE)

Zusatzmittel für Entfeuchtungsputz auf Zementbasis und seine Verwendung

Das Problem, wie man in die Mauer eingedrungene Feuchtigkeit wieder entfernen kann, tritt häufig auf, insbesondere bei der Altbausanierung. Dabei kann es sich sowohl um das Trocknen von ständig durchfeuchtetem Mauerwerk handeln, wie es in Gebäuden auftritt, in deren Räumen stets ein hoher Feuchtigkeitsgehalt vorliegt, wie Bädern, Brauereien und dergleichen, oder Mauerwerk, das durch aufsteigende Kapillarfeuchtigkeit aus dem Baufundament feucht ist, was insbesondere bei Altbauten häufig der Fall ist.

Wenn solche Mauerteile mit herkömmlichem Putz versehen werden, wird zwar die Oberfläche gegenüber dieser Feuchtigkeit abgedichtet, jedoch bleibt diese Feuchtigkeit dann auch in der Wand und »arbeitet« dort weiter.

Man hat daher schon lange Zeit nach Putzen gesucht, welche das in der Mauer vorliegende Wasser nach außen gelangen und wegtrocknen lassen. Ein wesentliches Kriterium des Putzes für diesen Zweck ist die Diffusionswiderstandszahl, also der Widerstand, welchen der Putz der Diffusion von Wasser aus dem Mauerwerk an die Putzoberfläche und somit zur Verdunstung in die Umgebungsluft entgegensetzt, wobei jedoch gleichzeitig eine gute Wärme- und Schallisolierung aufrechterhalten bleiben soll.

Gewöhnliche Kalkputze haben eine Diffusionswiderstandszahl von etwa 15 bis 18, während dieser Wert bei Zementmörtel bei ca. 22 bis 25 liegt. Kalkputze wären also grundsätzlich eher geeignet, diesen Zweck zu erreichen, da sie die Feuchtigkeit besser durch den Putz durchlassen als Zementmörtel, jedoch haben sie den Nachteil, die Feuchtigkeit nur langsam abzugeben, also nur langsam zu trocknen. Außerdem sind Kalkputze anfällig für Pilzwachstum. Während Zementmörtel gegen Pilzwachstum praktisch beständig sind, sind ihre sonstigen Eigenschaften für diesen Zweck wenig geeignet.

Man hat versucht, Putze durch Einführung größerer Kapillarität, also durch lockere Struktur hinsichtlich der Feuchtigkeitsdurchlässigkeit zu verbessern und hat dabei Diffusionswiderstandszahlen von ca. 11 für normale Putzdicken (ca. 15 mm) erzielt.

Dies reicht jedoch für viele Zwecke nicht aus, um eine trockene Wand zu erzielen, insbesondere dann, wenn dauernd Wasser durch aufsteigende Kapillarfeuchtigkeit aus dem Baufundament nachgeliefert wird.

In der GB-A-1 388 349 wird ein Verfahren zur Herstellung eines Betons oder Mörtels beschrieben, welches darin besteht, eine Zementmasse zu härten, die anfänglich eine wäßrige Dispersion eines Copolymeren enthält, das auf eine äthylenisch ungesättigte Carbonsäure und eines oder mehrere andere Vinylmonomere zurückgeht, die damit copolymerisierbar sind, wobei das Härten nach einer anfänglichen Verfestigung bei einer erhöhten Temperatur von wenigstens 40°C ausgeführt wird. Die Aufgabe des Zusatzes der wäßrigen Copolymerdispersion besteht darin, die mechanischen Eigenschaften und chemischen Widerstandsfähigkeiten von Betons und Mörteln zu erhöhen. Das Problem, in eine Mauer eingedrungene Feuchtigkeit wieder zu entfernen, wird in dieser Literaturstelle nicht angesprochen.

Aufgabe der Erfindung ist die Schaffung eines Zusatzmittels für Entfeuchtungsputz auf Zementbasis, mit dessen Hilfe ein Putz hergestellt werden kann, der nach seiner Aufbringung auf Mauerwerk etc. eine Mauerentfeuchtung bewirkt, wobei auch bei ständig nachsteigender Feuchtigkeit aus dem Fundament eine trockene geputzte Wandoberfläche entsteht, d. h., daß die in der Wand vorliegende und der Wand laufend zugeführte Feuchtigkeit weitgehend abgeführt und die Wand dadurch ausgetrocknet wird und trotzdem die Putzoberfläche dauernd trocken ist.

Diese Aufgabe wird durch die Erfindung gelöst durch ein Zusatzmittel für Entfeuchtungsputz auf Zementbasis, das oberflächenaktive Mittel und ein Styrolmischpolymer enthält. Dieses Mittel ist dadurch gekennzeichnet, daß es besteht aus

a) 15 bis 50 Gew.-% an anionischen Na-Salzen von Alkylnaphthalinsulfonsäuren,
b$_1$) 25 bis 75 Gew.-% an Na-Salzen von Alkylphenoläthersulfat und/oder Alkylbenzolsulfonat oder
b$_2$) 25 bis 75 Gew.-% an Na-Salzen von sulfatiertem C$_{12}$–C$_{15}$-Oxoalkoholpolyglykoläther und
c) 10 bis 40 Gew.-% an einem Styrolmischpolymer mit einer Säurezahl von 5 bis 15, wie es zur Herstellung von wäßrigen Kunststoffdispersionen geeignet ist,
sowie gegebenenfalls
d) 7 bis 15 Gew.-% einer leimfreien hochkonzentrierten Paraffindispersion und
e) 7 bis 15 Gew.-% an Na-Salzen eines Naphthalinsulfonsäure-Formaldehyd-Kondensationsproduktes.

Das erfindungsgemäße Zusatzmittel für Entfeuchtungsputz auf Zementbasis verleiht einem Fertigputz die Eigenschaft, aus dem befeuchteten Mauerwerk Wasser anzusaugen und dieses Wasser bzw. den entstehenden Wasserdampf schnell durch die Putzdicke zu leiten und auf der Außenseite an die Umgebung abzugeben, so daß die Maueroberfläche stets trocken ist.

Unter dem Begriff »Alkyl« ist vorzugsweise C$_1$–C$_6$-Alkyl zu verstehen, während der Ausdruck »Äther« oder »Polyglykol« sich vorzugsweise auf Polyoxyäthylenäther bezieht.

Die vorstehend angegebenen Komponenten d) und e) werden in zweckmäßiger Weise dann eingesetzt, wenn Wasser abweisende Putze erwünscht sind.

Das erfindungsgemäße Zusatzmittel wird für Zementputze verwendet, d. h. Putze auf der Basis von Sand und Zement. Dies bewirkt wesentlich bessere Diffusionswiderstandszahlen im Vergleich zu bekannten Kalkputzen.

Das erfindungsgemäße Zusatzmittel ist jedoch nicht nur für Putze auf der Basis von Sand und Zement verwendbar, sondern eignet sich auch sehr gut als Zusatz für Wärmedämmputze, wobei ein Teil des für den Putz verwendeten Sandes durch wärmedämmendes Material, insbesondere Styroporgranulat, jedoch auch Blähtongranulat, Vermikulit oder andere übliche Wärmedämmmaterialien ersetzt sein kann, wie nachfolgend noch näher ausgeführt werden wird.

Zur leichteren Dosierung wird der jeweilige Mischungsansatz in zweckmäßiger Weise verdünnt, insbesondere mit Quarzmehl, da dieses inert ist. Ein Zusatz der etwa gleichen Gewichtsmenge Quarzmehl zur Grundmischung des Putzzusatzmittels hat sich als zweckmäßig erwiesen. Auf diese Weise wird das Gewicht auf etwa das Doppelte erhöht, so daß leichter dosiert werden kann und Dosierungsprobleme nicht mehr so stark ins Gewicht fallen.

Vorzugsweise beträgt die Menge der Komponente a) 30 bis 40 Gew.-%, der Komponenten b) 40 bis 60 Gew.-% und Komponente c) 10 bis 20 Gew.-%.

In bevorzugter Weise besteht die Komponente c) aus einem Styrol-/Acrylsäure-Mischpolymeren oder einem Styrol-/Acrylsäureester-Acrylsäure-Mischpolymeren mit einer Säurezahl von 8 bis 12. Eine weitere Ausführungsform sieht vor, daß die Komponente c) aus einem butadienfreien Styrolmischpolymeren mit einer Säurezahl von 5 bis 15 besteht.

Bei dem Styrolmischpolymeren kann es sich insbesondere um ein Material mit einem Sinterpunkt über 100°C, einem Erweichungspunkt über 120°C, einem Schüttgewicht von 0,3 bis 0,4 kg/l, einer Dichte (d 20°/4°) von ca. 1,1 und mit einer Säurezahl von 8 bis 12, bestimmt durch Dispergieren des Pulvers in überschüssiger n/10 Natronlauge und unmittelbar folgendes Zurücktitrieren mit n/10 Schwefelsäure unter Verwendung von Phenolphtalein, handeln.

Die Komponenten a), b) und c) werden vorzugsweise jeweils in feinpulveriger trockener Form eingesetzt. Das gleiche gilt für die Komponente e).

Wenn ein Zusatz von jeweils 7 bis 15% an Paraffindispersion und/oder Natriumsalzen von Naphthalinsulfonsäure-Formaldehyd-Kondensat erfolgt, kann die Menge der drei Hauptbestandteile um jeweils ca. 2 bis 5% vermindert werden, so daß die Gesamtmenge der Bestandteile gleich bleibt. Beim Vorliegen der Komponenten d und e ist also vorzugsweise die Menge der Komponenten a), b) und c) entsprechend verringert.

Das erfindungsgemäße Putzzusatzmittel wird vorzugsweise in einer Menge von 50 bis 150 g/100 kg Sandzementmischung für Entfeuchtungsputz, insbesondere in einer Menge von 50 bis 100 g/100 kg Sandzementmischung für Normalputz und 50 bis 125 g/100 kg Sand-Zementmischung für Haftputz sowie 50 bis 100 g/ 100 kg Sand-Zement-Wärmedämmaterialmischung für Wärmedämmputz, wobei bis zu 85 Vol.-% des Sandes, insbesondere 50 bis 66 Vol.-% des Sandes, durch körniges Wärmedämmaterial, insbesondere Styroporkügelchen, ersetzt sind, verwendet.

Vorzugsweise erfolgt der Einsatz des erfindungsgemäßen Putzzusatzmittels durch Einmischen in den Putzmörtel während einer solchen Dauer, daß das Gemenge sahnig aufgeschäumt ist, insbesondere unter Mischen während 5 Minuten.

In Volumenverhältnissen zum Ausdruck gebracht, werden die erfindungsgemäßen Zusatzmittel für Putze auf Zementbasis bei Normalputzen unter Einsatz eines Sand/Zement-Verhältnisses von ca. 60 l Sand auf 10 bis 30 l Zement, insbesondere 15 l Zement, verwendet.

Sollen die Zusätze für Wärmedämmputze auf Zementbasis eingesetzt werden, so können statt der genannten 60 l Sand bis zu 50 l durch körniges wärmedämmendes Material in körniger oder stückiger Form ersetzt werden, wobei insbesondere Styroporkügelchen genannt seien. Die bevorzugte Menge des Wärmedämmaterials beträgt bei der angegebenen Zusammensetzung 60 l Sand auf 10 bis 30 l Zement, 10 bis 50 l Wärmedämmgranulat auf 10 l Sand, insbesondere 30 bis 40 l Wärmedämmaterial auf 20 bis 30 l Sand für 10 bis 30 l Zement, wobei die bevorzugte Zementmenge bei ca. 15 l Zement für Innenputze und ca. 20 bis 25 l Zement bei Außenputzen liegt. Die Korngröße der Kügelchen oder Stücke liegt vorzugsweise zwischen 1 und 4 mm.

Zur besseren Haftung des Putzes auf dem befeuchteten Mauerwerk ist es zweckmäßig, zuerst eine Haftputzschicht aufzubringen, wobei der Zementgehalt gegenüber dem Sand auf etwa das Doppelte erhöht ist, also ca. 60 l Sand und 30 l Zement verwendet werden. Auf 100 kg Sand/Zement im oben erläuterten Verhältnis werden 50 bis 150 g des unverdünnten Putzzusatzmittels verwendet, wobei für Normalputze die bevorzugte Menge 50 bis 100 g und für Haftputze 75 bis 125 g, jeweils pro 100 kg Sand-Zementmischung, beträgt. Die besonders bevorzugte Menge ist ca. 75 g bei Normalputzen und ca. 100 g bei Haftputzen, jeweils pro 100 kg Sand/Zementmischung. Je mehr Zement im Putz verwendet wird, desto höher wird zwar die Festigkeit des Putzes, desto geringer jedoch wird die Wasserdurchlässigkeit.

Das Putzen kann in üblicher Weise erfolgen, beispielsweise mit Hand oder mit der Maschine. Wesentlich ist, daß der alte, zerstörte Putz einschließlich der noch intakt scheinenden Putzflächen bis auf das Mauerwerk restlos abgeschlagen wird bzw. das Mauerwerk (bei Neubauten) ohne Putz vorliegt. Auch Farbanstriche sind restlos zu entfernen. Die Höhe der zu bearbeitenden Fläche muß eineinhalb Mauerstärken über der sichtbaren Feuchtigkeitsgrenze angesetzt werden. Zweckmäßig ist es auch, den Mörtel aus den Fugen des Mauerwerkes etwa 1 bis 2 cm herauszukratzen und anschließend mittels Drahtbesen oder -bürste das Mauerwerk so zu reinigen, daß keine losen Mörtelreste oder Staub mehr vorhanden sind. Ausgebrochenes Mauerwerk kann mit Putzmörtel und Steinen ausgebessert werden.

Vor Aufbringen des Putzes muß das Mauerwerk mit Wasser und Bürste abgewaschen oder mit hartem Strahl abgespritzt werden. Vor Aufbringen des Putzes muß das Mauerwerk jedenfalls noch feucht sein. Betonmauern sollen mehrmals vorgefeuchtet werden.

Es ist wie erwähnt zweckmäßig, zuerst einen Haftputz mit höherem Zementgehalt aufzubringen, und zwar in einer ca. 5 mm dünnen, jedoch allseits deckenden Schicht. Für manche Zwecke genügt diese Schicht schon. Bei Normalputzen jedoch wird dann der Putz mit der bevorzugten Sand/Zementzusammensetzung bis zu der gewünschten Gesamtdicke von meist 15 bis 25 mm aufgebracht. Der Putz trocknet sehr schnell und bleibt auch trocken, obwohl er dauernd Wasser aus dem durchfeuchteten Mauerwerk herausfördert.

Grundsätzlich genügen für diesen Effekt schon Putzstärken von 3 bis 5 mm, wie sie beispielsweise als sogenannte Schlämmputze aufgebracht werden.

Der mit dem erfindungsgemäßen Zusatz versehene Putz zeigt auch eine Unterbindung der Kondenswasserbildung, und zwar auch schon bei dünnen Schichten und zeigt auch keine Rückfeuchtung während des Austrocknungsprozesses, da Schlagregen, Spritzwasser und hohe Luftfeuchtigkeit von außen nur unwesentlich in den Putz eindringen können und dieser Effekt überwogen wird von der Förderung der Feuchtigkeit aus dem Inneren nach außen. Wegen des hohen Zementgehaltes und der praktisch trockenen Außenseite zeigt dieser Putz auch keinen Schimmel- oder Pilzbefall und blüht auch nicht aus. Der Putz zeigt erhöhte Elastizität und verminderte Spannrißbildung gegenüber herkömmlicher Putzen und auch die Schall- und Wärmedämmung ist herkömmlichen Putzarten überlegen.

Ein praktischer Ansatz einer bevorzugten Ausführungsform ist wie folgt:

16 Gew.-% Natriumsalz von Diisobutylnaphthalinsulfonsäure
22 Gew.-% Natriumsalz von sulfatiertem $C_{12} - C_{15}$-Oxoalkoholpolyglykoläther
6 Gew.-% feinpulvriges Styrol-Acrylsäure-Mischpolymerisat bzw. Styrol-Acrylester-Acrylsäure-Mischpolymerisat mit einer Säurezahl von 8 bis 12

Diese Menge wird mit
56 Gew.-% Quarzmehl auf 100 Gew.-% aufgefüllt.

Von diesem »verdünnten« Putzzusatzpräparat werden 100 g auf 30 l gewaschenem Natursand und 7,5 l Portlandzement für Normalputz verwendet. Wie erwähnt wird bei Haftputz die Zementmenge erhöht, so daß 100 g dieses verdünnten Präparates auf 20 l gewaschenem Natursand und 10 l Portlandzement anzuwenden sind.

Der Putzmörtel wird in an sich üblicher Weise zubereitet, wobei jedoch solange gemischt werden muß, bis das Gemenge sahnig aufgeschäumt ist, wofür üblicherweise eine Mischdauer von ca. 5 Minuten ausreicht.

Der Putzzusatz kann mit Erfolg für dünne Haftputze, dicke Normalputze als auch dünne Feinputze, jedoch auch für dicke Strukturlagen angewandt werden.

Bei Haftputzen werden für einen Ansatz 40 l gewaschener Natursand der Körnung 0 bis 4 mm oder 0 bis 7 mm mit 20 l Portlandzement und 90 g des unverdünnten oben gezeigten Präparates oder 200 g des mit 56 Gew.-% Quarzmehl verdünnten Präparates verwendet und der Putz wird in dünner Schicht, beispielsweise 3 bis 5 mm dick, aufgetragen.

Als zweite Schicht kann dann eine Normalputzlage von ca. 12 mm Dicke aufgebracht werden, wobei 60 l gewaschener Natursand der Körnung 0 bis 3 oder 0 bis 4 mm, wobei jedoch mindestens 80% 0 bis 1 mm Anteile vorhanden sind, und 15 l Portlandzement sowie 90 g des unverdünnten Präparates eingesetzt werden.

Für einen eventuellen Feinputz wird dann eine dünne Schicht Putzmörtel aus 60 l gewaschenem Natursand der Körnung 0 bis 1 mm, 15 l Portlandzement und 90 g des unverdünnten Putzzusatzes benutzt.

Bei Strukturlagen werden 60 l gewaschener Natursand der gewünschten Körnung mit 15 l Portlandzement und 90 g des Putzzusatzes verwendet.

Putze gemäß der Erfindung mit einer mittleren Dichte von 1525 kg/m³ zeigten bei der Prüfung auf Wasserdampfdurchlässigkeit nach DIN 52 615 (Trockenbereichverfahren) in Form von kreisförmigen Scheiben von 19 cm Durchmesser und einer durchschnittlichen Dicke von 20,5 mm eine Wasserdampfdurchlässigkeit von durchschnittlich 1,3 (Diffusionsdurchlaßwiderstand $1/\Delta[m^2 \cdot h \cdot Torr/g] = 1,733$ in den SI-Einheiten $[m^2 \cdot h \cdot bar/kg]$), was im Vergleich zur Wasserdampfdurchlässigkeit ruhender Luft eine Diffusionswiderstandszahl $\mu = 6,5$ ergibt, was einer gleichwertigen Luftschichtdicke $\mu_s$ von 0,13 [m] entspricht.

Dieser ungewöhnlich gute Wert bei einer durchschnittlichen Rohdichte des Putzes von ca. 1,5 g/cm³ läßt erkennen, daß die Wasserdampfdurchlässigkeit weitaus besser ist als bei bekannten Putzen.

**Patentansprüche**

1. Zusatzmittel für Entfeuchtungsputz auf Zementbasis, das oberflächenaktive Mittel und ein Styrolmischpolymer enthält, dadurch gekennzeichnet, daß es besteht aus

a)  15 bis 50 Gew.-% an anionischen Na-Salzen von Alkylnaphthalinsulfonsäuren,

b1)  25 bis 75 Gew.-% an Na-Salzen von Alkylphenoläthersulfat und/oder Alkylbenzolsulfonat, oder

b2)  25 bis 75 Gew.-% an Na-Salzen von sulfatiertem $C_{12}-C_{15}$-Oxoalkoholpolyglykoläther und

c)  10 bis 40 Gew.-% an einem Styrolmischpolymer mit einer Säurezahl von 5 bis 15, wie es zur Herstellung von wäßrigen Kunststoffdispersionen geeignet ist,

sowie gegebenenfalls

d)  7 bis 15 Gew.-% einer leimfreien hochkonzentrierten Paraffindispersion und

e)  7 bis 15 Gew.-% an Na-Salzen eines Naphthalinsulfonsäure-Formaldehyd-Kondensationsproduktes.

2. Putzzusatzmittel nach Anspruch 1, dadurch gekennzeichnet, daß die Komponenten a), b) und c) jeweils in feinpulvriger, trockener Form eingesetzt sind.

3. Putzzusatzmittel nach Anspruch 1 oder 2, dadurch gekennzeichnet, daß die Komponente c) aus butadienfreiem Styrolmischpolymer mit einer Säurezahl von 5 bis 15 besteht.

4. Putzzusatzmittel nach Anspruch 3, dadurch gekennzeichnet, daß die Komponente c) aus Styrol-/Acrylsäure-Mischpolymer oder Styrol-/Acrylsäureester-/Acrylsäure-Mischpolymer mit einer Säurezahl von 8 bis 12 besteht.

5. Putzzusatzmittel nach Anspruch 1, dadurch gekennzeichnet, daß auch die Komponente e) in feinpulvriger, trockener Form eingesetzt ist.

6. Putzzusatzmittel nach einem der vorhergehenden Ansprüche, dadurch gekennzeichnet, daß die Menge der Komponente a) 30 bis 40 Gew.-%, der Komponente b) 40 bis 60 Gew.-% und der Komponente c) 10 bis 20 Gew.-% beträgt.

7. Putzzusatzmittel nach Anspruch 1 bis 6, dadurch gekennzeichnet, daß es mit einem inerten Träger verdünnt ist.

8. Verwendung des Putzzusatzmittels nach einem der Ansprüche 1 bis 7 in einer Menge von 50 bis 150 g/100 kg Sand-Zementmischung für Entfeuchtungsputz, insbesondere in einer Menge von 50 bis 100 g/100 kg Sand-Zementmischung für Normalputz und 50 bis 125 g/100 kg Sand-Zementmischung für Haftputz sowie von 50 bis 100 g/100 kg Sand-Zement-Wärmedämmaterialmischung für Wärmedämmputz, wobei bis zu 85 Vol.-% des Sandes, insbesondere 50 bis 66 Vol.-% des Sandes, durch körniges Wärmedämmaterial, insbesondere Styroporkügelchen, ersetzt sind.

9. Verwendung nach Anspruch 8 unter Mischen des Putzes mit dem Zusatzmittel während einer solchen Dauer, daß das Gemenge sahnig aufgeschäumt ist, insbesondere unter Mischen während 5 Minuten.

## Claims

1. An additive for use with dehumidifying cement-base plasters containing surface active agents and styrene copolymer, characterized in that it consitst of

a)  15−50 weight % of anionic sodium salts of alkylnaphthalene sulfonic acids;

b1)  25−75 weight % of sodium salts of alkylphenol ether sulfate and/or alkylbenzene sulfonate; or

b2)  25−75 weight % of sodium salts of sulfated $C_{12}−C_{15}$ oxoalcohol polyglykolether and

c)  10−40 weight % of a styrene copolymer having an acid number of 5−15 as suitable for producing aqueous dispersions of plastics,

and if desired

d)  7−15 weight % of size-free highly concentrated paraffin dispersion, and

e)  7−15 weight % of sodium salts of a naphthalene sulfonic acid-formaldehyde condensation product.

2. A plaster additive according to Claim 1, characterized in that components a), b) and c) are each used in form of fine-grained dry powders.

3. A plaster additive according to Claim 1 or 2, characterized in that component c) consists of butadiene-free styrene copolymer having an acid number of 5−15.

4. A plaster additive according to Claim 3, characterized in that component c) consists of a styrene/acrylic acid copolymer or a styrene/acrylic acid ester/acrylic acid copolymer having an acid number of 8−12.

5. A plaster additive according to Claim 1, characterized in that also component e) is used in form of a fine-grained dry powder.

6. A plaster additive according to one of the preceeding claims, characterized in that the amount of component a) is 30−40 weight %, of compoment b) is 40−60 weight % and of component c) is 10−20 weight %.

7. A plaster additive according to Claims 1−6, characterized in that it is diluted with an inert carrier.

8. Use of the plaster additive according to one of Claims 1−7 in an amount of 50−150 g/100 kg sand-cement mixture for dehumidifying plaster, expecially in an amount of 50−100 g/100 kg sand/cement mixture for normal plaster and 50−125 g/100 kg sand/cement mixture for adehesive plaster and of 50−100 g/100 kg sand-cement-heat insulating material mixture for heat insulating plaster, wherein up to 85 volium % of the sand, especially 50−66 vol.% of the sand are replaced by granular heat insulation material, especially granular Styropor.

9. Use according to claim 8 by mixing the plaster composition and the additive for such a time that the mixture is foamed to a creamy foam, especially by mixing for 5 minutes.

# Revendications

1. Produit d'additif pour enduit déshydrateur à base de ciment, contenant des moyens tensioactifs et un copolymère de styrène, caractérisé en ce qu'il consiste en

a) 15 à 50% en poids de sels de sodium d'acides alkylnaphtalènesulfoniques anioniques,

b₁) 25 à 75% en poids de sels de sodium d'alkylphénolether sulfate et/ou d'alkylbenzène sulfonate, ou

b₂) 25 à 75% en poids de sels de sodium de sulfates d'éther de polyglycols et d'alcools Oxo $C_{12}-C_{15}$ et

c) 10 à 40% en poids d'un copolymère de styrène d'un indice de l'acide de 5 à 15 tel qu'il est apte à la préparation de dispersions aqueuses de produits synthétiques,

ainsi que, éventuellement,

d) 7 à 15% en poids d'une dispersion de paraffine exemptée de colle et à haute concentration, et

e) 7 à 15% en poids de sels de sodium d'un produit de condensation de formaldéhyde et d'acide naphtalènesulfonique.

2. Produit d'additif pour enduit selon la revendication 1, caractérisé en ce que les composantes a), b) et c) sont respectivement présentes sous forme pulvérulente sèche.

3. Produit d'additif pour enduit selon la revendication 1 ou 2, caractérisé en ce que la composante c) consiste en un copolymère de styrène exempté de butadiène et d'un indice de l'acide de 5 à 15.

4. Produit d'additif pour enduit selon la revendication 3, caractérisé en ce que la composante c) consiste en un copolymère styrène/acide acrylique ou un copolymère styrène/ester acrylique/acide acrylique d'un indice de l'acide de 8 à 12.

5. Produit d'additif pour enduit selon la revendication 1, caractérisé en ce que la composante e) également est présente sous forme pulvérulente sèche.

6. Produit d'additif pour enduit selon l'une quelconque des revendications précédentes, caractérisé en ce que la quantité de la composante a) constitue 30 à 40% en poids, celle de la composante b) 40 à 60% en poids et celle de la composante c) 10 à 20% en poids.

7. Produit d'additif pour enduit selon les revendications 1 à 6, caractérisé en ce qu'il est dilué par un véhicule inerte.

8. Utilisation du produit d'additif pour enduit selon l'une quelconque des revendications 1 à 7 en une quantité de 50 à 150 g/100 kg de mélange de sable et de ciment, pour enduit déshydrateur, en particulier en une quantité de 50 à 100 g/100 kg de mélange de sable et de ciment pour enduit normal et 50 à 125 g/100 kg de mélange de sable et de ciment pour enduit adhésif ainsi que 50 à 100 g/100 kg de mélange de sable et de ciment à isolement thermique pour enduit thermiquement isolant, jusque 85% en volume du sable, en particulier 50 à 66% en volume du sable, étant remplacé par un matériau granuleux thermiquement isolant, en particulier des globules de Styropor.

9. Utilisation selon la revendication 8, en mélangeant le produit d'additif à l'enduit pendant une durée telle que le mélange écume de manière onctueuse, en particulier en mélangeant pendant 5 minutes.